# EUROPEAN PATENT SPECIFICATION

(11) **EP 4 237 500 B1**
(45) Date of publication and mention of the grant of the patent: **26.08.2026**
(21) Application number: 21801646.7
(22) Date of filing: 25.10.2021
(51) Int. Cl.: C09D 11/54, C09D 11/40, C09D 11/38, C09D 11/102, C09D 11/107, C09D 11/322

(54) **INK SET, IMAGE FORMING METHOD, AND IMAGE FORMING DEVICE**
TINTENSATZ, BILDERZEUGUNGSVERFAHREN UND BILDERZEUGUNGSVORRICHTUNG
ENSEMBLE D'ENCRES, PROCÉDÉ DE FORMATION D'IMAGES ET DISPOSITIF DE FORMATION D'IMAGES

(30) Priority: 27.10.2020 JP 2020179690; 17.08.2021 JP 2021132575
(43) Date of publication of application: 06.09.2023
(73) Proprietor: Ricoh Company, Ltd., Tokyo 143-8555 (JP)
(72) Inventor: SHIMURA, Naoto, Tokyo 143-8555 (JP); KOIZUKA, Yuusuke, Tokyo 143-8555 (JP); TERAI, Nozomi, Tokyo 143-8555 (JP); TAKARADA, Tatsuya, Tokyo 143-8555 (JP)
(74) Representative: Marks & Clerk LLP
(86) International application number: PCT/IB2021/059802
(87) International publication number: WO 2022/090884

(56) References cited:
- EP-A1- 2 998 371
- EP-A1- 3 403 840
- US-A1- 2016 083 603
- US-A1- 2017 292 035
- US-A1- 2018 086 112

## Description

### [Technical Field]

The present disclosure relates to an ink set, an image forming method, and an image forming device.

### [Background Art]

An inkjet method has become popular because it can satisfy the demand of decoration for designs and readily print color images with simple processes in comparison with other printing methods. In addition, it is possible to print images with high resolution on substrates including non-permeating substrates such as acrylic plate and glass even with a simple configuration.

The ink for use in the inkjet method includes a solvent ink, UV curing ink, and latex ink.

Evaporation of the solvent contained in solvent ink raises environmental concerns. The polymerizable monomers for use in UV-curable ink are limited in some cases because of safety reasons. Latex ink involves a problem of peeling of an image by an external force applied to ink film in comparison with UV ink. Moreover, images on a non-permeating substrate blur when ink is applied to the substrate unless pre-processing fluid is applied to it.

In an attempt to solve these issues, aqueous inks, which can be applied to a substrate including a non-permeating recording medium minimizing environmental concerns. have been proposed in, for example, PTL1 and PTL 2. Additionally, EP 3403840 might be cited as prior art.

### [Citation List]

### [Patent Literature]

[PTL 1]
   Japanese Unexamined Patent Application Publication No. 2005-220352
[PTL 2]
   Japanese Unexamined Patent Application Publication No. 2011-094082

### [Summary of Invention]

### [Technical Problem]

The present disclosure is to provide an ink set having excellent blurring resistance and fixability against a non-permeating substrate.

### [Solution to Problem]

The ink set of the present disclosure for solving the issues is as described below.

An ink set contains an ink that contains
a coloring material, an organic solvent, and a resin, and a pre-processing fluid that contains a multivalent metal salt, a resin having a glass transition temperature (Tg) of 0 degrees C or lower, comprising a urethane resin or an acrylic resin;
a silicone-based surfactant, and two or more types of organic solvents each having a boiling point of 220 degrees C or lower.

### [Advantageous Effects of Invention]

According to the present disclosure, an ink set is provided which has excellent blurring resistance and fixability against a non-permeating substrate.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### [FIG. 1]

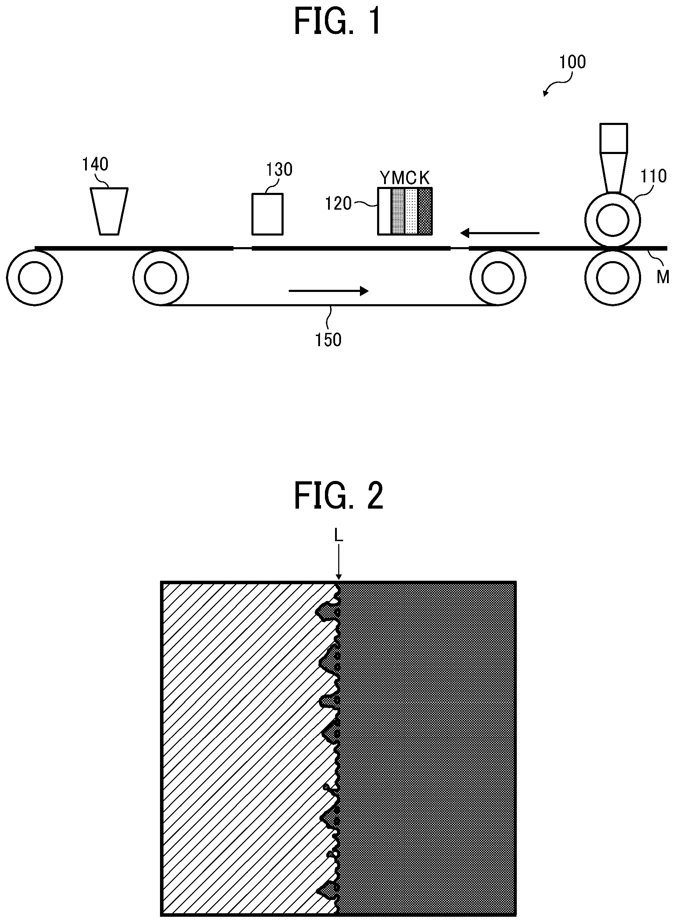

FIG. 1 is a diagram illustrating a perspective view of an example of the image forming device according to an embodiment of the present disclosure.

### [FIG. 2]

FIG. 2 is a schematic diagram illustrating a blurred image.

### [Description of Embodiment]

The terminology used herein is for the purpose of describing particular embodiments only and is not intended to be limiting of the present invention. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### Ink set

The ink set of the present disclosure is a combination of an ink and a pre-processing fluid. The ink set contains the ink and the pre-processing fluid described later.

Multiple color images can be created with an ink set containing at least two types of inks containing coloring materials of different colors. Full color images can be formed with an ink set having all the colors of cyan, magenta, and yellow. White ink is suitable as the background.

### Ink

The ink of the present disclosure contains a coloring material, an organic solvent, a resin. It may contain other optional components.

The colors of the ink is not particularly limited and can be suitably selected to suit to a particular application. They include colors such as yellow, magenta, cyan, black, and white.

### Pre-processing Fluid

The present disclosure for use in the present disclosure contains a multivalent metal salt, a resin having a glass transition temperature (Tg) of 0 degrees C or lower, comprising an urethane resin or an acrylic resin; a silicone-based surfactant, two or more types of organic solvents each having a boiling point of 220 degrees C or lower, and other optional components. The pre-processing fluid in the present disclosure may contain a coloring material.

### Coloring Material

The coloring material in the ink for use in the present disclosure has no particular limit and includes pigments and dyes.

The pigment includes an inorganic pigment or organic pigment. These can be used alone or in combination. In addition, a mixed crystal can also be used as the coloring material.

Examples of the pigments include, but are not limited to, black pigments, yellow pigments, magenta pigments, cyan pigments, white pigments, green pigments, orange pigments, and gloss or metallic pigments of gold, silver, and others.

Carbon black manufactured by known methods such as contact methods, furnace methods, and thermal methods can be used as the inorganic pigment in addition to titanium oxide, iron oxide, calcium carbonate, barium sulfate, aluminum hydroxide, barium yellow, cadmium red, and chrome yellow.

Specific examples of the organic pigment include, but are not limited to, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye type chelates and acid dye type chelates), nitro pigments, nitroso pigments, and aniline black. Of those pigments, pigments having good affinity with solvents are preferable. Hollow resin particles and hollow inorganic particles can also be used.

Specific examples of the pigments for black include, but are not limited to, carbon black (C.I. Pigment Black 7) such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to: C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4, (Phthalocyanine Blue), 16, 17:1, 56, 60, and 63, C.I. Pigment Green 1, 4, 7, 8, 10, 17, 18, and 36.

The dye is not particularly limited and includes, for example, acidic dyes, direct dyes, reactive dyes, basic dyes. These can be used alone or in combination. Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The proportion of the coloring material in the ink is preferably from 0.1 to 15 percent by mass and more preferably from 1 to 10 percent by mass to enhance the image density, fixability, and discharging stability.

The ink is obtained by a method of introducing a hydrophilic functional group into a pigment to prepare a self-dispersible pigment, a method of coating the surface of a pigment with a resin followed by dispersion, or a method of using a dispersant to disperse a pigment.

One way of preparing a self-dispersible pigment by introducing a hydrophilic functional group into a pigment is to add a functional group such as a sulfone group and carboxyl group to a pigment (e.g., carbon) to disperse the pigment in water.

One way of dispersing a resin by coating the surface thereof is to encapsulate a pigment in a microcapsule to make it disperse in water. This can be referred to as a resin-coated pigment. In this case, all the pigments to be added to ink are not necessarily entirely coated with a resin. Pigments partially or wholly uncovered with a resin are allowed to be dispersed in the ink unless such pigments have an adverse impact. The resin-coated pigment is preferable to enhance the storage stability and discharging reliability of ink.

One way of dispersing using a dispersant is to use a known dispersant represented by a surfactant having a small or large molecular weight.

It is possible to select an anionic surfactant, a cationic surfactant, a nonionic surfactant, an amphoteric surfactant, or others depending on a pigment.

Also, a nonionic surfactant (RT-100, manufactured by TAKEMOTO OIL & FAT CO., LTD.) and a formalin condensate of naphthalene sodium sulfonate are suitable as the dispersant. Those can be used alone or in combination.

### Pigment Dispersion

The ink can be obtained by mixing a pigment with materials such as water and an organic solvent. It is also possible to mix a pigment with water, a dispersant, and other substances to prepare a pigment dispersion and thereafter mix the pigment dispersion with materials such as water and an organic solvent to manufacture an ink.

The pigment dispersion is obtained by mixing and dispersing water, a pigment, a pigment dispersant, and other optional components and controlling the particle size. It is good to use a dispersing device for dispersion.

The particle diameter of the pigment in the pigment dispersion has no particular limit. For example, the maximum frequency is preferably from 20 to 500 nm and more preferably from 20 to 150 nm in the maximum number conversion to improve dispersion stability of the pigment and ameliorate discharging stability and the image quality such as image density. The particle diameter of the pigment can be analyzed using a particle size analyzer (Nanotrac Wave-UT151, manufactured by MicrotracBEL Corp).

The proportion of the pigment in the pigment dispersion is not particularly limited and can be suitably selected to suit a particular application. In order to improve discharging stability and image density, the proportion is preferably from 0.1 to 50 percent by mass and more preferably from 0.1 to 30 percent by mass.

It is preferable that the pigment dispersion be filtered with an instrument such as filter and a centrifuge to remove coarse particles followed by deaerating.

### Organic Solvent

There is no specific limitation to the organic solvent in the ink and the pre-processing fluid for use in the present disclosure. For example, a water-soluble organic solvent can be used. It includes, but is not limited to, polyhydric alcohols, ethers such as polyhydric alcohol alkylethers and polyhydric alcohol aryl ethers, nitrogen-containing heterocyclic compounds, amides, amines, and sulfur-containing compounds. It is preferable to contain two or more types of compounds each having a boiling point of 220 degrees C or lower, wherein the preprocessing fluid comprises two or more types of organic solvents each having a boiling point of 220 degrees C or lower to enhance the drying property of a substrate on which the pre-processing fluid has been applied.

Specific examples include, but are not limited to, polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkylethers such as ethylene glycol monoethylether, ethylene glycol monobutyl ether, diethylene glycol monomethylether, diethylene glycol monoethylether, diethylene glycol monobutyl ether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propionamide, and 3-butoxy-N,N-dimethyl propionamide; amines such as monoethanolamine, diethanolamine, and triethylamine; sulfur-containing compounds such as dimethyl sulfoxide, sulfolane, and thiodiethanol; propylene carbonate, and ethylene carbonate.

Polyol compounds having eight or more carbon atoms and glycol ether compounds are also suitable.

Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyhydric alcohol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether and polyhydric alcohol arylethers such as ethylene glycol monophenylether and ethylene glycol monobenzylether.

### Resin

The type of the resin contained in the ink and the pre-processing fluid has no particular limit and can be suitably selected to suit to a particular application. It includes, but is not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Resin particles made of such resins can be also used. It is possible to mix a resin emulsion in which such resin particles are dispersed in water as a dispersion medium with materials such as a coloring material and an organic solvent to obtain an ink. It is possible to use synthetic resin particles as the resin particle. Alternatively, the resin particle is procurable. The resin particle can be used alone or two or more type of the resin particles can be used in combination.

The resin contained in the ink preferably contains and the pre-processing fluid contains urethane or acrylic resin to improve the fixability onto a non-permeating substrate.

The resin contained in the pre-processing fluid has a glass transition temperature of 0 degrees C or lower. Such a resin ameliorates the attachability to a substrate. It is preferably nonionic or cationic resin to achieve good dispersion stability under the presence of a multivalent metal salt.

The proportion of the resin in the ink and the pre-processing fluid is not particularly limited and can be suitably selected to suit to a particular application. It is preferably from 1 to 30 percent by mass and more preferably from 3 to 15 percent by mass of the total mass of the ink to secure the fixability and the discharging reliability of the ink.

The particle diameter of the solid portion in the ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as optical density. The solid content includes resin particles and particles of pigment. The particle diameter can be measured by using a particle size analyzer (Nanotrac Wave-UT151, manufactured by MicrotracBEL Corp).

### Additive

The ink and the pre-processing fluid may furthermore optionally contain water and additives such as a surfactant, defoaming agent, preservative and fungicide, corrosion inhibitor, and pH regulator.

### Water

The proportion of water in the ink and the pre-processing fluid is not particularly limited and can be suitably selected to suit to a particular application. It is preferably from 10 to 90 percent by mass and more preferably from 20 to 60 percent by mass to enhance the drying property and discharging reliability of the ink.

### Surfactant

Examples of the surfactant in the ink for use in the present disclosure include, but are not limited to, silicone-based surfactants, fluorochemical surfactants, amphoteric surfactants, nonionic surfactants, and anionic surfactants. Of these, silicone-based surfactants are preferable considering the coverage by ink.

The surfactant in the pre-processing fluid in the present disclosure contains a silicone-based surfactant.

The silicone-based surfactant has no specific limit and can be suitably selected to suit to a particular application.

Of these, surfactants not decomposable in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. It is possible to use a polyether-modified silicone-based surfactant as the silicone-based surfactant. A specific example is a compound in which a polyalkylene oxide structure is introduced into the side chain of the Si site of dimethyl silooxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because the fluorochemical surfactant does not readily produce foams.

Specific examples of the perfluoroalkyl sulfonic acid compounds include, but are not limited to, perfluoroalkyl sulfonic acid and salts of perfluoroalkyl sulfonic acid. Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactant has no particular limit and can be suitably selected to suit to a particular application.

Specific examples include, but are not limited to, side-chain-modified polydimethyl siloxane, both terminal-modified polydimethyl siloxane, one-terminal-modified polydimethyl siloxane, and side chain both-terminal-modified polydimethyl siloxane. Of these, a polyether-modified silicone-based surfactant having a polyoxyethylene group or a polyoxyethylene polyoxypropylene group is particularly preferable because such a surfactant demonstrates good property as the aqueous surfactant.

Such surfactants can be synthesized or procured. Products can be procured from BYK-Chemie GmbH, Shin-Etsu Silicone Co., Ltd., Dow Corning Toray Co., Ltd., NIHON EMULSION Co., Ltd., Kyoeisha Chemical Co., Ltd., and others.

The polyether-modified silicone-based surfactant has no particular limit and can be suitably selected to suit to a particular application. For example, a compound is usable in which the polyalkylene oxide structure represented by the following Chemical Formula S-1 is introduced into the side chain of the Si site of dimethyl polysiloxane.

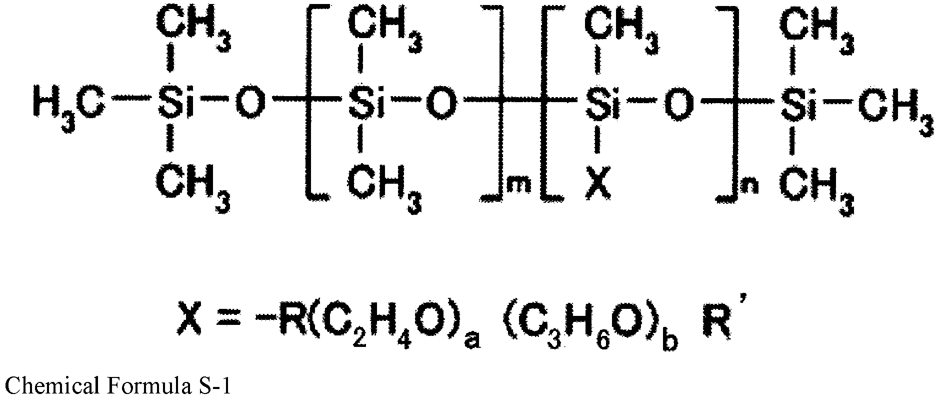

In Chemical Formula S-1, "m", "n", "a", and "b" each, respectively independently represent integers, R represents an alkylene group, and R' represents an alkyl group.

Specific examples of the polyether-modified silicone-based surfactant include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co., Ltd.), BYK-33 and BYK-387 (both manufactured by BYK Chemie GmbH), and TSF4440, TSF4452, and TSF4453 (all manufactured by Momentive Performance Materials Inc.).

A fluorochemical surfactant in which the number of carbon atoms replaced with fluorine atoms is 2 to 16 is preferable and, 4 to 16, more preferable.

Specific examples of the fluorochemical surfactant include, but are not limited to, perfluoroalkyl phosphoric acid ester compounds, adducts of perfluoroalkyl with ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because these do not easily foam and the fluorochemical surfactant represented by the following Chemical Formula F-1 or Chemical Formula F-2 is preferable.

CF₃CF₂(CF₂CF₂)ₘ-CH₂CH₂O(CH₂CH₂O)ₙH Chemical Formula F-1

In the compound represented by Chemical Formula F-1, "m" is preferably 0 or an integer of from 1 to 10 and "n" is preferably 0 or an integer of from 1 to 40.

CₙF2₂ₙ₊₁-CH₂CH(OH)CH₂-O-(CH₂CH₂O)ₐ-Y Chemical Formula F-2

In the compound represented by the Chemical Formula F-2, Y represents H or CₘF₂ₘ₊₁, where n represents an integer of from 1 to 6, or CH₂CH(OH)CH₂-CₘF₂ₘ₊₁, where m represents an integer of from 4 to 6, or CₚH₂ₚ₊₁, where p is an integer of from 1 to 19. "n" represents an integer of from 1 to 6. "a" represents an integer of from 4 to 14.

The fluorochemical surfactant is commercially available.

Specific examples include, but are not limited to, SURFLON S-111, S-112, S-113, S-121, S-131, S-132, S-141, and S-145 (all manufactured by ASAHI GLASS CO., LTD.); FLUORAD FC-93, FC-95, FC-98, FC-129, FC-135, FC-170C, FC-430, and FC-431 (all manufactured by Sumitomo 3M Limited); MEGAFACE F-470, F-1405, and F-474 (all manufactured by DIC CORPORATION); ZONYL TBS, FSP, FSA, FSN-100, FSN, FSO-100, FSO, FS-300, UR, and Capstone^{™} FS-30, FS-31, FS-3100, FS-34, and FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, and PF-159 (manufactured by OMNOVA SOLUTIONS INC.); and UNIDYNE^{™} DSN-403N (manufactured by DAIKIN INDUSTRIES, Ltd.). Of these, in terms of improvement on print quality, in particular coloring property and permeability, wettability, and uniform dying property on paper, FS-3100, FS-34, and FS-300 of The Chemours Company, FT-110, FT-250, FT-251, FT-400S, FT-150, and FT-400SW of NEOS COMPANY LIMITED, POLYFOX PF-151N of OMNOVA SOLUTIONS INC., and UNIDYNE^{™} DSN-403N (manufactured by DAIKIN INDUSTRIES, Ltd.) are particularly preferable.

The proportion of the surfactant in the ink and the pre-processing fluid is not particularly limited and can be suitably selected to suit to a particular application. It is preferably from 0.001 to 5 percent by mass and more preferably from 0.05 to 5 percent by mass to achieve excellent wettability and discharging stability and improve the image quality.

### Defoaming Agent

The defoaming agent has no particular limit. Examples include, but are not limited to silicone-based defoaming agents, polyether-based defoaming agents, and aliphatic acid ester-based defoaming agents. These can be used alone or in combination. Of these, silicone-based defoaming agents are preferable to achieve the effect of foam breaking.

### Preservatives and Fungicides

The preservatives and fungicides are not particularly limited. A specific example is 1,2-benzisothiazoline-3-one.

### Corrosion Inhibitor

The corrosion inhibitor has no particular limitation. Specific examples include, but are not limited to, acid sulfites and sodium thiosulfates.

### pH Regulator

The pH regulator has no particular limit as long as it can control pH to be not lower than 7. Specific examples include, but are not limited to, amines such as diethanol amine and triethanol amine.

Properties of the ink and the pre-processing fluid are not particularly limited and can be suitably selected to suit to a particular application; viscosity, surface tension, and pH are preferable in the following ranges.

The ink and the pre-processing fluid preferably have a viscosity of from 5 to 30 mPa• s and more preferably from 5 to 25 mPa• s at 25 degrees C to enhance the print density and text quality and achieve a good dischargeability. Viscosity can be measured by equipment such as a rotatory viscometer (RE-80L, manufactured by TOKI SANGYO CO., LTD.). The measuring conditions are as follows:
- Standard cone rotor (1°34' × R24)
- Sample liquid amount: 1.2 mL
- Rate of rotation: 50 rotations per minute (rpm)
- 25 degrees C
- Measuring time: three minutes.

The surface tension of the ink and the pre-processing fluid is preferably 35 mN/m or less and more preferably 32 mN/m or less at 25 degrees C because the ink suitably levels on a recording medium and the ink dries in a shorter time.

pH of the ink is preferably from 7 to 12 and more preferably from 8 to 11 to prevent corrosion of metal material in contact with liquid.

### Multivalent Metal Salt

The multivalent metal salt contained in the pre-processing fluid quickly aggregates the pigment in the ink after the ink droplet reaches the recording medium, thereby reducing color bleed and improving coloring.

Examples of multivalent metal compounds are, but are not limited to, compounds of titanium, chromium, copper, cobalt, strontium, barium, iron, aluminum, calcium, or magnesium, and multivalent metal salts thereof.

Of these multi-valent metal compounds, at least one member selected from the group consisting of calcium compounds, magnesium compounds, and nickel compounds is preferable because they effectively aggregate pigments. Alkali earth metal such as calcium and magnesium are more preferable.

Incidentally, ionic multivalent metal compounds are preferable. In particular, calcium salts as the multivalent metal compounds stabilize reaction liquid.

Specific examples of the multi-valent metal compounds include, but are not limited to, calcium carbonate, calcium nitrate, calcium chloride, calcium acetate, calcium sulfate, magnesium chloride, magnesium acetate, magnesium sulfate, barium sulfate, zinc sulfide, zinc carbonate, aluminum silicate, calcium silicate, magnesium silicate, and aluminum hydroxide.

Of these, calcium salts or magnesium salts are preferable in terms of the solubility to pre-processing fluid and bleaching of the film of pre-processing fluid at an application to a non-permeating substrate.

### Image Forming Method

The image forming method of the present disclosure includes applying the pre-processing fluid in the ink set of the present disclosure to a recording medium and applying the ink in the ink set of the present disclosure to the recording medium onto which the pre-processing fluid has been applied.

It may furthermore optionally include drying the recording medium onto which the pre-processing fluid and the ink have been applied after applying the ink.

A non-permeating substrate can be used as the recording medium. It includes leather.

### Image Forming Device

The image forming device of the present disclosure includes a pre-processing fluid applying device for applying the pre-processing fluid of the ink set of the present disclosure to a recording medium and an ink applying device for applying the ink of the ink set of the present disclosure to the recording medium onto which the pre-processing fluid has been applied.

The ink applying device applies at least one type of stimuli selected from the group consisting of heat, pressure, vibration, and light to the ink and discharges the ink for creating an image.

### Recording Medium

The recording medium is not particularly limited. Materials such as plain paper, gloss paper, special paper, and cloth are usable. Also, good images can be formed on a non-permeating substrate.

The non-permeating substrate has a surface with low moisture permeability and absorbency. It includes a material having a number of hollow spaces inside that are not open to the outside. To be more quantitative, the substrate has a water-absorbency of 10 or less mL/m² from the start of the contact until 30 msec^{1/2} later according to Bristow's method.

For example, plastic films such as vinyl chloride resin film, polyethylene terephthalate (PET) film, polypropylene film, polyethylene film, and polycarbonate film are suitably used as the non-permeating substrate.

The recording media are not limited to typical recording media and suitably include building materials such as wall paper, floor material, and tiles, cloth for apparel such as T-shirts, textile, and leather. The configuration of the paths through which the recording medium is conveyed can be changed to use materials such as ceramics, glass, and metal.

The method of applying the ink and the pre-processing fluid is not particularly limited and can be suitably selected to suit to a particular application. It includes an inkjet method (inkjeting), blade coating method, gravure coating method, bar coating method, roll coating method, dip coating method, curtain coating method, slide coating method, die coating method, and spray coating method. Of these, the inkjetting is preferable.

### Recording Device and Recording Method

The ink of the present disclosure can be suitably applied to various recording devices employing an inkjet recording method, such as printers, facsimile machines, photocopiers, multifunction peripherals (serving as a printer, a facsimile machine, and a photocopier), and solid freeform fabrication devices such as 3D printers and additive manufacturing devices.

In the present disclosure, the recording device and the recording method respectively represent a device capable of discharging ink and liquids such as various processing fluids to a recording medium and a method of recording utilizing such a device. The recording medium means an item to which ink or various processing fluids can be temporarily or permanently attached.

The recording device may furthermore optionally include a device relating to feeding, conveying, and ejecting a recording medium and other devices referred to as a pre-processing device and a post-processing device in addition to the head portion for discharging the ink.

The recording device and the recording method may further optionally include a heating device (heater) for use in the heating process and a drying device (drier) for use in the drying process. For example, the heating device and the drying device heat and dry the print surface and the opposite surface of a recording medium. The heating device and the drying device are not particularly limited. For example, a fan heater and an infra-red heater can be used. Heating and drying can be conducted before, in the middle of, or after printing.

In addition, the recording device and the recording method are not limited to those producing meaningful visible images such as text and figures with ink. For example, the recording method and the recording device capable of producing patterns like geometric design and 3D images are included.

In addition, the recording device includes both a serial type device in which the discharging head moves and a line type device in which the discharging head is not moved, unless otherwise specified.

Furthermore, in addition to the desktop type, this recording device includes a device capable of printing images on a recording medium having a large size such as A0 size, and a continuous printer capable of using continuous paper rolled up in a roll-like form as a recording medium.

First Embodiment of Image Forming Device

An example of an image forming device is illustrated in FIG. 1.

In the image forming method of the present disclosure, it is possible to apply the ink and the pre-processing fluid by using a single or separate printing devices.

An image forming device 100 includes a pre-processing fluid application unit 110, an ink discharging unit 120, a post-processing fluid discharging unit 130, a drying unit 140, and a conveying unit 150.

The pre-processing fluid application unit 110 applies pre-processing fluid to a recording medium M.

There is no specific limit to the methods of applying the pre-processing fluid.

Specific examples of such methods include, but are not limited, an inkjet printing method, a blade coating method, a gravure coating method, a gravure offset coating method, a bar coating method, a roll coating method, a knife coating method, an air knife coating method, a comma coating method, a U comma coating method, an AKKU coating method, a smoothing coating method, a microgravure coating method, a reverse roll coating method, a four or five roll coating method, a dip coating method, a curtain coating method, a slide coating method, and a die coating method.

The pre-processing fluid application unit 110 can be omitted.

The recording medium M for use in printing is not particularly limited.

Specific examples include, but are not limited to, plain paper, gloss paper, special paper, cloth, film, transparent sheets, and printing paper for general purposes.

When coated paper for commercial printing is used as the recording medium M, images formed without applying pre-processing fluid may incur multi-feed during conveyance of the recording medium M in the following process.

Pre-processing fluid is applied to solve this problem, minimizing the occurrence of multi-feed during conveyance without degrading blocking resistance.

The ink discharging unit 120 discharges inkjet ink to the surface of the recording medium M onto which the pre-processing fluid has been applied.

The ink discharging unit 120 can be any known inkjet head.

The post-processing fluid discharging unit 130 discharges post-processing fluid to the region of the surface of the recording medium M onto which inkjet ink has been applied.

The post-processing fluid discharging unit 130 can be any known inkjet head.

Instead of the post-processing fluid discharging unit 130, a post-processing fluid discharging unit can be disposed for applying the post-processing fluid to substantially all the regions of the surface of the recording medium M onto which the inkjet ink has been applied.

There is no specific limit to the selection of the methods of applying the post-processing fluid. Specific examples of such methods include, but are not limited, an inkjet printing method, a blade coating method, a gravure coating method, a gravure offset coating method, a bar coating method, a roll coating method, a knife coating method, an air knife coating method, a comma coating method, a U comma coating method, an AKKU coating method, a smoothing coating method, a microgravure coating method, a reverse roll coating method, a four or five roll coating method, a dip coating method, a curtain coating method, a slide coating method, and a die coating method.

The post-processing fluid discharging unit 130 can be omitted.

The drying unit 140 dries the recording medium M with heated wind onto which the post-processing fluid is already applied.

Without a post-processing fluid discharging unit, the drying unit 140 can be omitted.

The drying unit 140 can use infra red, microwave, a roll heater instead of heated wind to heat and dry the recording medium M onto which the post-processing fluid is applied. It is also possible to naturally dry the recording medium M onto which the overcoating liquid is applied.

The conveying unit 150 conveys the recording medium M.

There is no specific limit to the conveying unit 150 which can convey the recording medium M. A specific example thereof is a conveyor belt.

The image forming device 100 may furthermore include a fixing unit for heat-fixing an image formed on the recording medium M.

There is no specific limit to the selection of the fixing unit. A specific example thereof is a fixing roller.

The temperature at which the image formed on the recording medium M is heat-fixed ranges from 50 to 150 degrees C and preferably from 100 to 150 degrees C.

Terms such as image forming, recording, printing, and print used in the present disclosure represent the same meaning.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

### EXAMPLES

Next, the present disclosure is described in detail with reference to Examples but is not limited thereto.

### Preparation Example 1 of Liquid Dispersion of Pigment

### Preparation of Liquid Dispersion A of Black Pigment

The following raw materials were preliminarily mixed and dispersed in a circulation manner for seven hours by a disk-type bead mill (KDL type, manufactured by SHINMARU ENTERPRISES CORPORATION; Media: zirconia ball having a diameter of 0.3 mm) to obtain a liquid dispersion of black pigment.

### Composition

| | |
|---|---|
| • Carbon black pigment (Monarch 800, manufactured by Cabot Corporation): | 15 parts |
| • Anionic surfactant (Pionine A-51-B, manufactured by TAKEMOTO OIL & FAT Co., Ltd.): | 2 parts |
| • Deionized water: | 83 parts |

### Preparation Example 2 of Liquid Dispersion of Pigment

### Preparation of Liquid Dispersion A of Cyan Pigment

A liquid dispersion A of cyan pigment was prepared in the same manner as in Preparation Example 1 of Liquid Dispersion of Pigment except that the carbon black pigment was replaced with Pigment Blue 15:3 (LIONOL BLUE FG-7351, manufactured by Toyo Ink SC Holdings Co., Ltd.).

### Preparation Example 3 of Liquid Dispersion of Pigment

### Preparation of Liquid Dispersion B of Black Pigment

A total of 11.2 g of styrene, 2.8 g of acrylic acid, 12 g of lauryl methacrylate, 4 g of polyethylene glycol methacrylate, 4 g of styrene macromer, and 0.4 g of mercapto ethanol were mixed in a flask followed by heating to 65 degrees C. Next, a liquid mixture of 100.8 g of styrene, 25.2 g of acrylic acid, 108 g of lauryl methacrylate, 36 g of polyethylene glycol methacrylate, 60 g of hydroxyethyl methacrylate, 36 g of styrene macromer, 3.6 g of mercapto ethanol, 2.4 g of azobismethyl valeronitrile, and 18 g of methylethyl ketone was added dropwise to the flask in two and a half hours. Subsequently, a liquid mixture of 0.8 g of azobismethyl valeronitrile and 18 g of methyl ethyl ketone was added dropwise to the flask in half an hour. After one-hour aging at 65 degrees C, 0.8 g of azobismethyl valeronitrile was added followed by aging for another hour. After the reaction was complete, 364 g of methylethyl ketone was added to the flask to obtain 800 g of a polymer solution A having a concentration of the solid portion of 50 percent.

Next, 28 g of the polymer solution A, 42 g of carbon black (Black Pearls 1000, manufactured by Cabot Corporation), 13.6 g of 1 mol/L potassium hydroxide solution, 20 g of methylethyl ketone, and 13.6 g of water were sufficiently stirred followed by mixing and kneading with a roll mill. The obtained paste was placed in 200 g of pure water followed by sufficient stirring. Methylethyl ketone was removed with an evaporator followed by pressure-filtering with a polyvinylidene fluoride membrane filter having an average pore diameter of 5 µm. The moisture of the filtrate was adjusted to obtain a liquid dispersion B of styrene-acrylic-based resin-coated black pigment having a concentration of solid portion of 20 percent.

### Preparation Example 4 of Liquid Dispersion of Pigment

### Preparation of Liquid Dispersion B of Cyan Pigment

A liquid dispersion B of styrene-acrylic-based resin-coated cyan pigment having a concentration of solid portion of 20 percent was prepared in the same manner as in the preparation of the liquid dispersion B of styrene-acrylic-based resin-coated black pigment except that Pigment Blue 15:4 (SMART Cyan 3154BA, manufactured by Sensient Technologies Corporation) was used instead of carbon black.

### Preparation Example 1 of Polyurethane Resin Emulsion

### Preparation of Polyester-based Urethane Resin Emulsion

In a nitrogen-substituted container equipped with a thermometer, a nitrogen gas-introducing tube, and a stirrer, 200.4 g of polyester polyol (POLYLITE^{®} OD-X-2251, average molecular weight of 2,000, manufactured by DIC Corporation), 15.7 g of 2,2-dimethylol propionic acid, 48.0 g of isophorone diisocyanate, and 77.1 g of methyl ethyl ketone as an organic solvent were allowed to react using 0.06 g of dibutyltin dilaurate (DMTDL) as a catalyst. Four hours later, 30.7 g of methyl ethyl ketone was supplied as a diluting agent and the reaction was allowed to continue. When the average molecular weight of the reaction product reached the range of from 20,000 to 60,000, 1.4 g of methanol was charged to complete the reaction so that an organic solvent solution of urethane resin was obtained. A total of 13.4 g of potassium hydroxide aqueous solution at 48 percent by mass was added to the organic solvent solution of urethane resin to neutralize the carboxyl group contained in the urethane resin. Thereafter, 715.3 g of water was added followed by sufficient stirring and aging and solvent removal, thereby obtaining a polyether-based urethane resin emulsion having a solid portion of 30 percent by mass. Using this polyether-based urethane resin emulsion, the minimum film-forming temperature (MFT) was measured by film-forming temperature tester (manufactured by Imoto machinery Co., LTD.), which was 74 degrees C.

### Manufacturing Example 1 of Ink

### Manufacturing of Ink a

Deionized water was added as a balance to the following formulation so as to be 100 parts in total. Subsequent to preparation, the resulting substance was mixed and stirred followed by filtering with a filter having an average pore diameter of 5 µm (Minisart^{®}, manufactured by Sartorius Stedim Biotech GmbH) to obtain ink a.

### Ink Recipe

| | |
|---|---|
| • Liquid dispersion B of black pigment or liquid dispersion B of cyan pigment: | 20 parts |
| • Polyether-based urethane resin emulsion: | 6 parts |
| • Acrylic resin (Mowinyl 6750, manufactured by Japan Coating Resin Co., Ltd.): | 2 parts |
| • SAG503A (silicone surfactant, manufactured by Nissin Chemical co., ltd.: | 1 part |
| • 1,2-propane diol (Propylene glycol, manufactured by ADEKA CORPORATION): | 9 parts |
| • 1,3-propane diol (manufactured by DuPont de Nemours, Inc.): | 1 part |
| • 3-methyl-1,3-butane diol (isobutylene glyol, manufactured by KURARAY CO.,LTD.): | 10 parts |
| • 3-methoxy-3-methyl-1-butanol (SOLFIT, manufactured by KURARAY CO., LTD .): | 3 parts |
| • 3-methoxy-N,N-dimethyl propionamide (Equamide^{™} M100, manufactured by Idemitsu Kosan Co., Ltd.): | 5 parts |
| • PROXEL LV (preservatives and fungicides, manufactured by AVECIA GROUP): | 0.1 parts |
| • Deionized water: | Balance |
| Total: | 100 parts |

Manufacturing Examples 2 to 5 and Manufacturing Examples 1 to 8 of Pre-processing Fluid Manufacturing of Inks b to e and Pre-processing Fluids A to H

Inks b to e and Pre-processing fluids A to H were manufactured in the same manner as in Manufacturing Example 1 of Ink except that the ink formulation was changed to those shown in Table 1. The content of the resin in Table 1 was represented in solid mass. Pre-processing fluids D-H are Reference Pre-processing fluids.

**Table 1**

| Component category | Ink composition of ink set | Combination of ink | | | | | |
|---|---|---|---|---|---|---|---|
| | | a | | b | | c | |
| | | Black | Cyan | Black | Cyan | Black | Cyan |
| Liquid dispersion of pigment | Liquid dispersion A of black pigment | | | | | 20 | |
| | Liquid dispersion B of black pigment (resin-coated) | 20 | | 20 | | | |
| | Liquid dispersion A of cyan pigment | | | | | | 20 |
| | Liquid dispersion B of cyan pigment (resin-coated) | | 20 | | 20 | | |
| Resin | Polyurethane resin (SUPERFLEX^{®} 300) | | | | | 4.5 | 4.5 |
| | Polyurethane resin (MFT: 74 degrees C) | 6.0 | 6.0 | | | | |
| | Polyurethane resin (W6110) | | | 3.0 | 3.0 | | |
| | Acrylic resin (Mowinyl 6800) | | | 4.0 | 4.0 | | |
| | Acrylic resin (Mowinyl 6810) | | | | | 4.5 | 4.5 |
| | Acrylic resin (Mowinyl 6750) | 2.0 | 2.0 | | | | |
| | Copolymer resin of vinyl chloride-vinyl acetate (SOLBIN TA3) | | | | | | |
| Surfactant | Fluorochemical surfactant surfactant (FS-300) | | | | | | |
| | Silicone-based surfactant | 1.0 | 1.0 | | | | |
| | (SAG503A) | | | | | | |
| | Silicone-based surfactant (SAG002) | | | 1.0 | 1.0 | | |
| | Silicone-based surfactant (BYK348) | | | | | 0.5 | 0.5 |
| Organic solvent | 1,2-propane diol (boiling point: 187 degrees C) | 9 | 9 | 5 | 5 | | |
| | 1,3-propane diol (boiling point: 217 degrees C) | 1 | 1 | | | 8 | 8 |
| | 1,3-butane diol (boiling point: 207 degrees C) | | | 5 | 5 | | |
| | 2-ethyl-1,3-hexane diol (boiling point: 244 degrees C) | | | | | 5 | 5 |
| | 3-methyl-1,5-pentane diol (boiling point: 250 degrees C) | | | | | | |
| | 3-methyl-1,3-butane diol (boiling point: 205 degrees C) | 10 | 10 | 5 | 5 | 2 | 2 |
| | 3-methoxy-3-methyl-1-butanol (boiling point: 175 degrees C) | 3 | 3 | 5 | 5 | | |
| | 3-methoxy-N,N-dimethyl propionamide (boiling point: 216 degrees C) | 5 | 5 | | | 5 | 5 |
| | 3-butoxy-N,N-dimethyl propionamide: 252 degrees C | | | 4 | 4 | 5 | 5 |
| Preservatives and fungicides | PROXEL LV, manufactured by AVECIA GROUP | 0.1 | 0.1 | 0.1 | 0.1 | 0.1 | 0.1 |
| Water | Highly pure water | Balance | Balance | Balance | Balance | Balance | Balance |
| Total amount | | 100 | 100 | 100 | 100 | 100 | 100 |

| Component category | Ink composition of ink set | Combination of ink | | | |
|---|---|---|---|---|---|
| | | d | | e | |
| | | Black | Cyan | Black | Cyan |
| | Liquid dispersion A of black pigment | 20 | | | |
| Liquid dispersion of pigment | Liquid dispersion B of black pigment (resin-coated) | | | 20 | |
| | Liquid dispersion A of cyan pigment | | 20 | | |
| | Liquid dispersion B of cyan pigment (resin-coated) | | | | 20 |
| Resin | Polyurethane resin (SUPERFLEX^{®} 300) | | | | |
| | Polyurethane resin (MFT: 74 degrees C) | | | | |
| | Polyurethane resin (W6110) | | | | |
| | Acrylic resin (Mowinyl 6800) | | | | |
| | Acrylic resin (Mowinyl 6810) | | | | |
| | Acrylic resin (Mowinyl 6750) | | | | |
| | Copolymer resin of vinyl chloride-vinyl acetate (SOLBIN TA3) | 8.0 | 8.0 | | |
| Surfactant | Fluorochemical surfactant surfactant (FS-300) | 1.0 | 1.0 | | |
| | Silicone-based surfactant (SAG503A) | | | 0.5 | 0.5 |
| | Silicone-based surfactant (SAG002) | | | | |
| | Silicone-based surfactant (BYK348) | | | | |
| Organic solvent | 1,2-propane diol (boiling point: 187 degrees C) | | | 8 | 8 |
| | 1,3-propane diol (boiling point: 217 degrees C) | 3 | 3 | | |
| | 1,3-butane diol (boiling point: 207 degrees C) | 5 | 5 | | |
| | 2-ethyl-1,3-hexane diol (boiling point: 244 degrees C) | | | | |
| | 3-methyl-1,5-pentane diol (boiling point: 250 degrees C) | 2 | 2 | 2 | 2 |
| | 3-methyl-1,3-butane diol (boiling point: 205 degrees C) | | | 5 | 5 |
| | 3-methoxy-3-methyl-1-butanol (boiling point: 175 degrees C) | 5 | 5 | | |
| | 3-methoxy-N,N-dimethyl propionamide (boiling point: 216 degrees C) | | | 3 | 3 |
| | 3-butoxy-N,N-dimethyl propionamide: 252 degrees C | 8 | 8 | 7 | 7 |
| Preservatives and fungicides | PROXEL LV, manufactured by AVECIA GROUP | 0.1 | 0.1 | 0.1 | 0.1 |
| Water | Highly pure water | Balance | Balance | Balance | Balance |
| Total amount | | 100 | 100 | 100 | 100 |

**Table 2**

| Component category | Composition of pre-processing fluid of ink set | Type of pre-processing | | | |
|---|---|---|---|---|---|
| | | A | B | C | D |
| Flocculant | Calcium acetate | | | 3 | |
| | Magnesium acetate | 3 | | | |
| | Magnesium sulfate | | 2 | | |
| | Sodium acetate | | | | 10 |
| Resin | Polyurethane resin (XW-Um7) (Tg = -4 degrees C) | 8.0 | | | 4.0 |
| | Acrylic resin (Mowinyl 6940) (Tg = -2 degrees C) | | 7.0 | | |
| | Acrylic resin (Mowinyl 6950) (Tg = 0 degrees C) | | | | 3.0 |
| | Acrylic resin (Mowinyl 6951) (Tg = -25 degrees C) | | | 8.0 | |
| | Ethylene-vinyl acetate resin: SUMIKAFLEX^{®} 951HQ, Tg = -25 degrees C) | | | | |
| | Ethylene-vinyl acetate resin: SUMIKAFLEX^{®} 408HQE, Tg = - 30 degrees C) | | | | |
| | Acrylic-urethane resin (ACRIT UW-550CS) (Tg: core portion: 50 degrees C, shell portion: 40 degrees C) | | | | |
| Surfactant | Fluorochemical surfactant (FS-300) | | | | |
| | Silicone-based surfactant (SAG503A) | 1.0 | | | 0.3 |
| | Silicone-based surfactant (SAG002) | | 1.0 | 0.3 | |
| | Silicone-based surfactant (BYK348) | | | | |
| Organic solvent | 1,2-propane diol | 10 | | 8 | |
| | (boiling point: 187 degrees C) | | | | |
| | 1,3-propane diol (boiling point: 217 degrees C) | | 4 | | 8 |
| | 1,3-butane diol (boiling point: 207 degrees C) | 2 | 6 | | |
| | Glycerin (boiling point: 290 degrees C) | | | 2 | |
| | 2-ethyl-1,3-hexane diol (boiling point: 244 degrees C) | | 5 | 5 | |
| | 3-methyl-1,3-butane diol (boiling point: 205 dgrees C) | | 5 | | 3 |
| | 3-methoxy-3-methyl-1-butanol (boiling point: 175 degrees C) | 5 | | | |
| | 3-methoxy-N,N-dimethyl propionamide (boiling point: 216 degrees C) | 10 | | 10 | 5 |
| | 3-butoxy-N,N-dimethyl propionamide (boiling point: 252 degrees C) | | 5 | | 5 |
| Preservatives and fungicides | PROXEL LV, manufactured by AVECIA GROUP | 0.1 | 0.1 | 0.1 | 0.1 |
| Water | Highly pure water | Balance | Balance | Balance | Balance |
| Total amount | | 100 | 100 | 100 | 100 |

| Component category | Composition of pre-processing fluid of ink set | Type of pre-processing | | | |
|---|---|---|---|---|---|
| | | E | F | G | H |
| Flocculant | Calcium acetate | | 2 | | |
| | Magnesium acetate | 1 | | | |
| | Magnesium sulfate | | | | |
| | Sodium acetate | | | 8 | |
| Resin | Polyurethane resin (XW-Um7) (Tg = -4 degrees C) | | | | 2.0 |
| | Acrylic resin (Mowinyl 6940) (Tg = -2 degrees C) | | | | |
| | Acrylic resin (Mowinyl 6950) (Tg = 0 degrees C) | | | | |
| | Acrylic resin (Mowinyl 6951) (Tg = -25 degrees C) | | | | 4.0 |
| | Ethylene-vinyl acetate resin: SUMIKAFLEX^{®} 951HQ, Tg = -25 degrees C) | 7.0 | | | |
| | Ethylene-vinyl acetate resin: SUMIKAFLEX^{®} 408HQE, Tg = - 30 degrees C) | | 8.0 | | |
| | Acrylic-urethane resin (ACRIT UW-550CS) (Tg: core portion: 50 degrees C, shell portion: 40 degrees C) | | | 5.0 | |
| Surfactant | Fluorochemical surfactant (FS-300) | | 1.0 | | |
| | Silicone-based surfactant (SAG503A) | | | | |
| | Silicone-based surfactant (SAG002) | 0.6 | | | |
| | Silicone-based surfactant (BYK348) | | | 1.0 | 0.3 |
| Organic solvent | 1,2-propane diol (boiling point: 187 degrees C) | 5 | 2 | | |
| | 1,3-propane diol (boiling point: 217 degrees C) | | | 6 | |
| | 1,3-butane diol (boiling point: 207 degrees C) | | 6 | | |
| | Glycerin (boiling point: 290 degrees C) | 5 | | | 10 |
| | 2-ethyl-1,3-hexane diol (boiling point: 244 degrees C) | 10 | 2 | | 10 |
| | 3-methyl-1,3-butane diol (boiling point: 205 dgrees C) | | | 6 | 8 |
| | 3-methoxy-3-methyl-1-butanol (boiling point: 175 degrees C) | | 4 | 2 | |
| | 3-methoxy-N,N-dimethyl propionamide (boiling point: 216 degrees C) | 8 | | 7 | |
| | 3-butoxy-N,N-dimethyl propionamide (boiling point: 252 degrees C) | | | | |
| Preservatives and fungicides | PROXEL LV, manufactured by AVECIA GROUP | 0.1 | 0.1 | 0.1 | 0.1 |
| Water | Highly pure water | Balance | Balance | Balance | Balance |
| Total amount | | 100 | 100 | 100 | 100 |

The details of each component in Tables 1 to 2 are as follows.

### Resin-Ink Component

- SUPERFLEX 300 (polyurethane resin, manufactured by DKS Co. Ltd., solid content concentration of 30 percent by mass)
- W6110 polyurethane resin (solid content concentration of 35 percent by mass, manufactured by Mitsui Chemicals, Inc.)
- Mowinyl 6810 (acrylic resin, solid content concentration of 42 percent by mass, manufactured by Japan Coating Resin Co., Ltd.)
- Mowinyl 6800 (acrylic resin, solid content concentration of 45 percent by mass, manufactured by Japan Coating Resin Co., Ltd.)
- Mowinyl 6750 (acrylic resin, solid content concentration of 50 percent by mass, manufactured by Japan Coating Resin Co., Ltd.)
- SOLBIN TA3 (copolymer of vinyl chloride and vinyl acetate, Tg of 65 degrees C, manufactured by Nissin Chemical Industry Co., Ltd.)

### Surfactant

- FS-300 (fluorochemical surfactant, manufactured by DuPont de Nemours, Inc.)
- SAG002 (silicone surfactant, manufactured by Nissin Chemical co., ltd.)
- BYK 348 (silicone-based surfactant, manufactured by BYK-Chemie GmbH)

### Organic Solvent

- 1,3-butane diol (1,3-butane diol, manufactured by Daicel Corporation) (boiling point of 207 degrees C)
- 3-methyl-1,5-pentane diol (MPD, manufactured by KURARAY CO., LTD.) (boiling point of 250 degrees C)
- 2-ethyl-1,3-hexane diol (octane diol, manufactured by KH Neochem Co., Ltd.) (boiling point of 244 degrees C)
- 3-butoxy-N,N-dimethyl propionamide (Equamide^{™} B 100, manufactured by Idemitsu Kosan Co., Ltd.) (boiling point of 252 degrees C)

### Flocculant

- Calcium acetate
- Magnesium acetate
- Magnesium sulfate
- Sodium acetate

### Resin-Pre-processing Fluid Component

- XW-Um7 (urethane resin, Tg of -4 degrees C, manufactured by Mitsui Chemicals, Inc.)
- Mowinyl 6940 (acrylic resin, Tg of -2 degrees C, manufactured by Japan Coating Resin Co., Ltd.)
- Mowinyl 6950 (acrylic resin, Tg of 0 degrees C, manufactured by Japan Coating Resin Co., Ltd.)
- Mowinyl 6951 (acrylic resin, Tg of -25 degrees C, manufactured by Japan Coating Resin Co., Ltd.)
- SUMIKAFLEX^{®} 951HQ (ethylene-vinyl acetate resin, Tg of -25 degrees C, manufactured by Sumika Chemtex Company, Limited)
- SUMIKAFLEX^{®} 408HQE (ethylene-vinyl acetate resin, Tg of -30 degrees C, manufactured by Sumika Chemtex Company, Limited)
- ACRIT UW-550CS (core-shell acrylic resin, core portion Tg of 50 degrees C, shell portion Tg of 40 degrees C, manufactured by TAISEI FINE CHEMICAL CO., LTD.)

### Examples 1 to 7 and Comparative Examples 1 to 5

Blurring resistance and fixability of each ink were evaluated in the following manner. The results are shown in Table 3.

### Image Formation

The black unit and the cyan unit of an inkjet printer (Ri 100, manufactured by Ricoh CO., Ltd.) was filled with black and cyan ink of each ink set. The magenta unit was filled with the pre-processing fluid. A solid image of the pre-processing fluid (magenta) with 80 percent gradation was printed on polystyrene (STYREX^{®} 500), acrylic (ACRYLITE^{®} EX clear), and polycarbonate (Iupilon^{®} white, NF-2000C) in T-shirt Fast Mode followed by printing of a solid color image with 100 percent gradation. The obtained printed matter was allowed to pass a heated wind drying unit at 80 degrees C to dry and fix the image.

### Blurring Resistance

Blurring of the image was visually checked at the color boundary of the black and the cyan. The printed matter graded B or above is usable for practical purpose.

FIG. 2 is a schematic diagram illustrating a blurred image. L represents the border at the color boundary when blurring is not present.

### Evaluation Criteria

A: Blurring at color boundary is not present at all
B: Slight blurring is present at one to five portions
C: Slight blurring is present at six to ten portions
D: Significant blurring is present, which degrades the image quality

### Fixability

According to the grid peeling test for the solid portion of the image using a cloth adhesive tape (123LW-50, manufactured by NICHIBAN CO., Ltd.), the number of grids remaining in the 100 test grids was counted for evaluation.

The printed matter graded B or above is usable for practical purpose.

### Evaluation Criteria

AA: Number of remaining grids is 100
A: Number of remaining grids is 90 to less than 100
B: Number of remaining grids is 80 to less than 90
C: Number of remaining grids is 70 to less than 80
D: Number of remaining grids is less than 70

### [Prior Art Reference]

### [Patent Publication Reference]

Table 3 In table 3 examples No. 5 and 6 are Reference Examples.

| | | | | Example No. | | | | | | |
|---|---|---|---|---|---|---|---|---|---|---|
| | | | | 1 | 2 | 3 | 4 | 5 | 6 | 7 |
| Ink set | Type of pre-processing fluid | | | A | B | B | C | A | D | E |
| | Type of ink | | | a | b | c | b | d | c | a |
| Evaluation result | Blurring resistance | Substrate | Polystyrene | A | A | A | A | B | B | A |
| | | | Acrylic | A | A | B | A | B | B | B |
| | | | Polycarbonate | A | A | A | A | A | B | B |
| | Fixability | Substrate | Polystyrene | AA | AA | AA | A | B | A | B |
| | | | Acrylic | AA | AA | A | A | A | A | B |
| | | | Polycarbonate | AA | AA | AA | AA | A | A | B |

| | | | | Comparative Example No. | | | | |
|---|---|---|---|---|---|---|---|---|
| | | | | 1 | 2 | 3 | 4 | 5 |
| Ink set | Type of pre-processing fluid | | | F | G | H | C | - |
| | Type of ink | | | d | c | a | e | b |
| Evaluation result | Blurring resistance | Substrate | Polystyrene | B | C | D | C | D |
| | | | Acrylic | B | C | D | D | D |
| | | | Polycarbonate | C | C | D | C | D |
| | Fixability | Substrate | Polystyrene | B | C | C | C | D |
| | | | Acrylic | C | C | B | D | D |
| | | | Polycarbonate | B | C | B | C | D |

This patent application is based on and claims priority to Japanese Patent Application Nos. 2020-179690 and 2021-132575, respectively, filed on October 27, 2020 and August 17, 2021, in the Japan Patent Office.

### [Reference Signs List]

- 100: Image forming device
- 110: Pre-processing fluid application unit
- 120: Ink discharging unit
- 130: Post-processing fluid discharging unit
- 140: Drying unit
- 150: Conveying unit
- M: Recording medium
- L: Border at color boundary when blurring is not present

## Claims

1. An ink set comprising:
an ink comprising:
a coloring material;
an organic solvent; and
a resin; and
a pre-processing fluid comprising:
a multivalent metal salt;
a resin having a glass transition temperature (Tg) of 0 degrees C or lower, comprising a urethane resin or an acrylic resin;
a silicone-based surfactant; and
two or more types of organic solvents each having a boiling point of 220 degrees C or lower.

2. The ink set according to claim 1,
wherein the multivalent metal salt in the pre-processing fluid comprises a magnesium salt or a calcium salt.

3. The ink set according to claim 1 or 2,
wherein the resin in the ink comprises a urethane resin or an acrylic resin.

4. The ink set according to any one of claims 1 to 3,
wherein the two or more types of organic solvents comprises three or more types of organic solvents.

5. The ink set according to any one of claims 1 to 4,
wherein the coloring material comprises a resin-coated pigment.

6. An image forming method comprising:
applying the pre-processing fluid in the ink set of any one of claims 1 to 5 to a recording medium; and
applying the ink in the ink set of any one of claims 1 to 5 to the recording medium onto which the pre-processing fluid has been applied.

7. The image forming method according to claim 6,
wherein at least one of the pre-processing fluid or the ink is applied by inkjetting.

8. The image forming method according to claim 6 or 7,
further comprising drying the recording medium on which the pre-processing fluid and the ink have been applied.

9. The image forming method according to any one of claims 6 to 8,
wherein the recording medium comprises a non-permeating substrate.

10. An image forming device comprising:
a pre-processing fluid applying device containing the pre-processing fluid of the ink set of any one of claims 1 to 5 and configured to apply the pre-processing fluid to a recording medium; and
an ink applying device containing the ink of the ink set of any one of claims 1 to 5 and configured to apply the ink to the recording medium onto which the pre-processing fluid has been applied.

11. The image forming device according to claim 10,
wherein at least one of the pre-processing fluid applying device or the ink applying device employs inkjetting.

## Patentansprüche

1. Tintensatz, umfassend:
Tinte, umfassend:
ein Farbmaterial;
ein organisches Lösungsmittel; und
ein Harz; und
ein Vorverarbeitungsfluid, umfassend:
ein mehrwertiges Metallsalz;
ein Harz, das eine Glasübergangstemperatur (Tg) von 0 Grad C oder niedriger aufweist, umfassend ein Urethanharz oder ein Acrylharz;
ein Tensid auf Silikonbasis; und
zwei oder mehr Arten von organischen Lösungsmitteln, die jeweils einen Siedepunkt von 220 Grad C oder niedriger aufweisen.

2. Tintensatz nach Anspruch 1,
wobei das mehrwertige Metallsalz in dem Vorverarbeitungsfluid ein Magnesiumsalz oder ein Calciumsalz umfasst.

3. Tintensatz nach Anspruch 1 oder 2,
wobei das Harz in der Tinte ein Urethanharz oder ein Acrylharz umfasst.

4. Tintensatz nach einem der Ansprüche 1 bis 3,
wobei die zwei oder mehr Arten von organischen Lösungsmitteln drei oder mehr Arten von organischen Lösungsmitteln umfassen.

5. Tintensatz nach einem der Ansprüche 1 bis 4,
wobei das Farbmittel ein harzbeschichtetes Pigment umfasst.

6. Bilderzeugungsverfahren, umfassend:
Aufbringen des Vorverarbeitungsfluids in dem Tintensatz nach einem der Ansprüche 1 bis 5 auf ein Aufzeichnungsmedium; und
Aufbringen der Tinte aus dem Tintensatz nach einem der Ansprüche 1 bis 5 auf das Aufzeichnungsmedium, auf das das Vorverarbeitungsfluid aufgebracht wurde.

7. Bilderzeugungsverfahren nach Anspruch 6,
wobei mindestens eines des Vorverarbeitungsfluids oder der Tinte durch Tintenstrahldruck aufgebracht wird.

8. Bilderzeugungsverfahren nach Anspruch 6 oder 7,
weiter umfassend Trocknen des Aufzeichnungsmediums, auf das das Vorverarbeitungsfluid und die Tinte aufgebracht wurden.

9. Bilderzeugungsverfahren nach einem der Ansprüche 6 bis 8,
wobei das Aufzeichnungsmedium ein nicht-permeables Substrat umfasst.

10. Bilderzeugungsvorrichtung, umfassend:
eine Vorrichtung zum Aufbringen eines Vorverarbeitungsfluids, die das Vorverarbeitungsfluid des Tintensatzes nach einem der Ansprüche 1 bis 5 enthält und konfiguriert ist, um das Vorverarbeitungsfluid auf ein Aufzeichnungsmedium aufzubringen; und
eine Vorrichtung zum Aufbringen von Tinte, die die Tinte aus dem Tintensatz nach einem der Ansprüche 1 bis 5 enthält und konfiguriert ist, um die Tinte auf das Aufzeichnungsmedium aufzubringen, auf das das Vorverarbeitungsfluid aufgebracht wurde.

11. Bilderzeugungsvorrichtung nach Anspruch 10,
wobei mindestens eine der Vorrichtung zum Aufbringen eines Vorverarbeitungsfluids oder der Vorrichtung zum Aufbringen von Tinte Tintenstrahldruck einsetzt.

## Revendications

1. Ensemble d'encres comprenant :
une encre comprenant :
une matière colorante ;
un solvant organique ; et
une résine ; et
un fluide de prétraitement comprenant :
un sel métallique multivalent ;
une résine présentant une température de transition vitreuse (Tg) de 0 degré C ou moins, comprenant une résine d'uréthane ou une résine acrylique ;
un tensioactif à base de silicone ; et
deux, ou plus, types de solvants organiques présentant chacun un point d'ébullition de 220 degrés C ou moins.

2. Ensemble d'encres selon la revendication 1,
dans lequel le sel métallique multivalent du fluide de prétraitement comprend un sel de magnésium ou un sel de calcium.

3. Ensemble d'encres selon la revendication 1 ou 2,
dans lequel la résine de l'encre comprend une résine d'uréthane ou une résine acrylique.

4. Ensemble d'encres selon l'une quelconque des revendications 1 à 3,
dans lequel les deux, ou plus, types de solvants organiques comprennent trois, ou plus, types de solvants organiques.

5. Ensemble d'encres selon l'une quelconque des revendications 1 à 4,
dans lequel la matière colorante comprend un pigment enrobé de résine.

6. Procédé de formation d'image comprenant :
l'application du fluide de prétraitement dans l'ensemble d'encres selon l'une quelconque des revendications 1 à 5 sur un support d'enregistrement ; et
l'application de l'encre dans l'ensemble d'encres selon l'une quelconque des revendications 1 à 5 sur le support d'enregistrement sur lequel le fluide de prétraitement a été appliqué.

7. Procédé de formation d'image selon la revendication 6,
dans lequel au moins un du fluide de prétraitement ou de l'encre est appliqué par jet d'encre.

8. Procédé de formation d'image selon la revendication 6 ou 7,
comprenant en outre le séchage du support d'enregistrement sur lequel le fluide de prétraitement et l'encre ont été appliqués.

9. Procédé de formation d'image selon l'une quelconque des revendications 6 à 8,
dans lequel le support d'enregistrement comprend un substrat non perméable.

10. Dispositif de formation d'image comprenant :
un dispositif d'application de fluide de prétraitement contenant le fluide de prétraitement de l'ensemble d'encres selon l'une quelconque des revendications 1 à 5 et configuré pour appliquer le fluide de prétraitement sur un support d'enregistrement ; et
un dispositif d'application d'encre contenant l'encre de l'ensemble d'encres selon l'une quelconque des revendications 1 à 5 et configuré pour appliquer l'encre sur le support d'enregistrement sur lequel le fluide de prétraitement a été appliqué.

11. Dispositif de formation d'image selon la revendication 10,
dans lequel au moins un du dispositif d'application de fluide de prétraitement ou du dispositif d'application d'encre utilise l'impression jet d'encre.
